# EUROPÄISCHE PATENTSCHRIFT

(11) **EP 0 777 046 B1**
(45) Veröffentlichungstag und Bekanntmachung des Hinweises auf die Patenterteilung: **27.10.1999**
(21) Anmeldenummer: 96110878.4
(22) Anmeldetag: 05.07.1996
(51) Int. Cl.: F02M 37/22, F02M 25/022

(54) **Kraftstoffilter, insbesondere für Dieselkraftstoff**
Fuel filter, especially for diesel engines
Filtre pour carburants, spécialement adapté pour moteurs diesel

(30) Priorität: 02.12.1995 DE 19545133
(43) Veröffentlichungstag der Anmeldung: 04.06.1997
(73) Patentinhaber: ROBERT BOSCH GMBH, 70442 Stuttgart (DE)
(72) Erfinder: Mutschler, Jan, 28027 Madrid (ES); Projahn, Ulrich, 28109 Madrid (ES); Granda-Trigo, Miguel, 28037 Madrid (ES); Esteban, Santos Orfiz, 28043 Madrid (ES)

(56) Entgegenhaltungen:
- DE-A- 3 308 378
- DE-A- 3 631 846
- DE-A- 4 409 570
- DE-U- 9 408 687
- GB-A- 2 129 329
- US-A- 4 637 351

## Beschreibung

### Stand der Technik

Die Erfindung geht aus von einem Kraftstoffilter nach der im Oberbegriff des Anspruchs 1 näher angegebenen Gattung.

Es ist schon ein solches Kraftstoffilter aus der DE 94 08 687 U1 bekannt, bei dem zur Vermeidung einer manuellen Wartung der Wasserentsorgung eine kontinuierlich arbeitende Einrichtung zur Wasserentleerung vorgesehen ist. Bei dieser Einrichtung ist über ein Saugrohr aus einem auf der Reinseite gelegenen Wasserspeicherraum Wasser zum Ablauf-Anschluß abführbar, so daß es von dem abfließenden Flüssigkeitsstrom fein vermengt mitgeführt wird. Auf diese Weise werden durchflußabhängig so fein verteilte Wassertröpfchen zur Einspritzpumpe eines Verbrennungsmotors mitgerissen, daß dessen Betrieb nicht merklich gestört wird. Dabei kann die Einrichtung so ausgelegt werden, daß bei Leerlauf des Verbrennungsmotors überhaupt keine Wasserteilchen über das Saugrohr in den Kraftstoffstrom gelangen. Obwohl dieses Kraftstoffilter mit Wasserentsorgung in vielen Fällen vorteilhaft einsetzbar ist, hat es doch den Nachteil, daß hier bei einem konstanten Kraftstoff-Durchfluß auch eine konstante Wasserabsaugung auftritt. Bei Kraftstoff-Versorgungssystemen, bei denen eine Vorförderpumpe einen konstanten Durchfluß erzeugt, wie dies zum Beispiel bei einem Common-Rail-System der Fall ist, ist dieses Kraftstoffilter schlecht geeignet, da eine Anpassung der erforderlichen Absaugrate von Wasser schlecht möglich ist.

Ferner ist aus der DE 33 08 378 A1 ein Kraftstoffversorgungssystem bekannt, bei dem der Kraftstoff vom Tank über ein Filter und einen gesonderten Wasserabscheider zur Einspritzpumpe geführt wird. Dabei sind im Wasserabscheider Sensoren zur Anzeige der Höhe des Wasserstandes angeordnet, deren Signale über eine elektrische Schaltanlage Magnetventile steuern. Erreicht der Wasserstand ein unteres Niveau, so wird ein am Wasserabscheider angeordnetes Ablaßventil geöffnet. Erreicht der Wasserstand ein oberes Niveau, so unterbricht ein Absperrventil den Kraftstoffluß zur Einspritzpumpe. Nachteilig bei diesem System ist, daß für die Wasserentsorgung ein hoher Aufwand getrieben wird. Insbesondere führen die Sensoren mit den zugehörigen Schaltungen und den Magnetventilen zu einer aufwendigen und teuren Bauweise. Ferner erfordert die vom Filter getrennte Bauweise des Wasserabscheiders einen besonders großen Aufwand. In vielen Fällen ist auch ein vollständiges Absperren des Kraftstofflusses zur Einspritzpumpe für eine Applikation der Wasserentsorgung ungeignet.

Ferner ist aus der DE 44 09 570 A1 eine Kraftstoffanlage für eine Brennkraftmaschine bekannt, bei der zur Entsorgung von in einem Filter abgeschiedenem Wasser eine Leitung von dessen Wasserspeicherraum über ein extern angeordnetes Magnetventil in das Ansaugrohr für die Verbrennungsluft des Motors führt. Das Magnetventil wird von einem elektrischen Motorsteuergerät angesteuert, das unter anderem die Signale eines Wasserstand-Sensors erhält. Das unter dem Druck einer Kraftstoff-Förderpumpe stehende Wasser wird beim Öffnen des Magnetventils über eine Düse in das Ansaugrohr gespritzt, und zwar dann, wenn der Motor sich in einem unkritischen Fahrt- bzw. Lastzustand befindet. Das Entsorgen des Wassers geschieht von der Schmutzseite des Filters aus, so daß mitgerissene Verunreinigungen zu verstärktem Verschleiß führen können.

Weiterhin ist aus der GB 21 29 329 A1 eine Kraftstoffanlage mit Wasserentsorgung aus einem Filter bekannt, bei der das Wasser ebenfalls in die angesaugte Verbrennungsluft des Motors geführt wird. Zu einem Luftfilter im Ansaugrohr ist eine Venturidüse parallel geschaltet, in deren engster Stelle ein zum Wasserspeicherraum des Filters führendes Saugrohr mündet. Zum Aktivieren der Wasserentsorgung wird der Luftstrom über die Venturidüse von einem Magnetventil gesteuert, das Signale von einem Wasserstandssensor erhält. Auch hier wird das Wasser in die Ansaugluft des Motors entsorgt, wobei das Magnetventil außerhalb des Filtergehäuses angeordnet ist.

### Vorteile der Erfindung

Das erfindungsgemäße Kraftstoffilter mit den kennzeichnenden Merkmalen des Hauptanspruchs hat demgegenüber den Vorteil, daß es bei relativ einfacher und kompakter Bauweise vielseitig anwendbar ist, da eine Anpassung der Absaugrate von Wasser auch bei konstantem Durchfluß des Kraftstoffs leicht möglich ist. Das Kraftstoffilter baut zudem auch kostengünstig. Die Einrichtung zur automatischen Wasserabsaugung läßt sich in bereits vorhandene Kraftstoffilter günstig integrieren. Ferner ist diese Einrichtung zur Wasserabsaugung auch bei Kraftstoffiltern anwendbar, die mit einem austauschbaren Filtereinsatz arbeiten, wobei das die Absaugrate beeinflussende Magnetventil im Gehäuse verbleiben kann. Das Kraftstoffilter erlaubt eine relativ leichte Montage, wobei defekte Teile der Einrichtung zur Wasserabsaugung leicht austauschbar sind und zudem die Teile dieser Einrichtung kostengünstig herstellbar sind.

Durch die in den Unteransprüchen aufgeführten Maßnahmen sind vorteilhafte Weiterbildungen und Verbesserungen des im Anspruch 1 angegebenen Kraftstoffilters möglich.

### Zeichnung

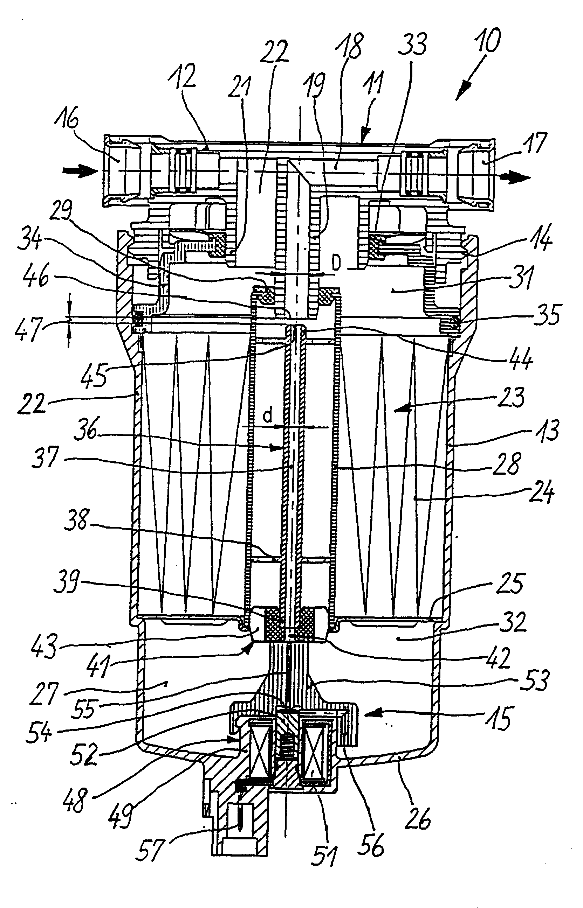

Ein Ausführungsbeispiel der Erfindung ist in der Zeichnung dargestellt und in der nachfolgenden Beschreibung näher erläutert. Es zeigt die einzige Figur einen Längsschnitt durch ein Kraftstoffilter mit einer Einrichtung zur Wasserentsorgung.

### Beschreibung des Ausführungsbeispiels

Die einzige Figur zeigt im Längsschnitt ein Kraftstoffilter 10 für Dieselkraftstoff, dessen Gehäuse 11 im wesentlichen aus einem Deckelteil 12 und einer Filterbox 13 besteht, die mit Hilfe eines an sich bekannten Bajonettverschlusses 14 am Deckelteil 12 lösbar befestigt ist. Ferner ist im Gehäuse 11 eine Einrichtung 15 zur Wasserentsorgung integriert.

Am Deckelteil 12 sind koaxial zueinander und in einer zur Längsachse des Kraftstoffilters 10 quer verlaufenden Ebene ein Zulauf-Anschluß 16 sowie ein Ablauf-Anschluß 17 ausgebildet. Vom Ablauf-Anschluß 17 führt ein winkelförmig verlaufender Kanal 18 zu einem Rohrstutzen 19, der zentrisch ausgebildet ist und zur Filterbox 13 hin ragt. Ferner liegt am Deckelteil 12 konzentrisch zum Rohrstutzen 19 ein mit größerem Durchmesser versehener und zur Abdichtung nach außen hin dienender Ringsteg 21. Ein zwischen Ringsteg 21 und Rohrstutzen 19 liegender Ringraum 22 steht mit dem Zulauf-Anschluß 16 in Verbindung.

Die am Deckelteil 12 lösbar befestigte Filterbox 13 weist ein becherförmiges Gehäuseteil 22 auf, das in seinem Inneren ein austauschbar angeordnetes Filterelement 23 aufnimmt, das seinerseits einen axial durchströmten Wickeleinsatz 24 aufweist. Das Filterelement 23 stützt sich auf einem Lochblech 25 ab, das zusammen mit einem Boden 26 des Gehäuseteils 22 einen Wasserspeicherraum 27 begrenzt. Der Wickeleinsatz 24 ist auf einem Mittelrohr 28 angeordnet, an dessem oberen Ende ein Innendichtring 29 eingehängt ist, der beim Befestigen der Filterbox 13 am Deckelteil 12 auf den inneren Rohrstutzen 19 aufgeschoben wird und diesen dabei dichtend umgreift, so daß die Schmutzseite 31 von der Reinseite 32 getrennt ist. Gleichzeitig wird beim Zusammenbau dieser beiden Teile ein Außendichtring 33 auf den Ringsteg 21 aufgeschoben, so daß die Schmutzseite 31 nach außen hin abgedichtet ist. Der Außendichtring 33 sitzt dabei am Innendurchmesser einer stirnseitig am Wickeleinsatz 24 angeordneten Ringscheibe 34, welche an ihrem Außenumfang durch einen O-Ring 35 im becherförmigen Gehäuseteil 22 abgedichtet ist.

In das Kraftstoffilter 10 ist nun die Einrichtung 15 zur Wasserentsorgung integriert, die ein in dem Filterelement 23 liegendes Saugrohr 36 mit zugeordnetem Abfuhrkanal 37 für das Wasser aufweist. Dieses Saugrohr 36 ist als gerades Rohr ausgebildet, das konzentrisch zur Längsachse des Kraftstoffilters 10 liegt und in seiner axialen Länge etwas kürzer ausgeführt ist, als die axiale Ausdehnung des Mittelrohrs 28. Das Saugrohr 36 weist zwei im Abstand voneinander liegende, scheibenförmige und gelochte Halterungen 38 auf, mit denen es im Mittelrohr 28 befestigt ist. Mit seinem unteren Ende 39 ist das Saugrohr 36 in einen elastischen Dichtring 41 gesteckt, so daß es dessen zentralen Durchgang 42 nur teilweise durchdringt. Der Dichtring 41 ist in Höhe des Lochbleches 25 in das Mittelrohr 36 eingesetzt und weist an seinem Außenumfang mehrere Nuten 43 auf, welche den Kraftstofffluß vom Wasserspeicherraum 27 in das Mittelrohr 28 erlauben. Am oberen Ende 44 des Saugrohrs 36 endet der Abführkanal 37 in einer Öffnung 45, die unmittelbar einer Einlaßöffnung 46 im Rohrstutzen 19 gegenüberliegt. Beide Öffnungen 45, 46 liegen dabei in zueinander parallelen Ebenen und in einem geringen Abstand 47 voneinander, der durch die Lage des Saugrohrs 36 innerhalb des Mittelrohrs 28 justierbar ist. Die Strömungsverhältnisse im Bereich dieser Öffnungen 45, 46 sind in an sich bekannter Weise so ausgeführt, daß der über die Einlaßöffnung 46 zum Ablauf-Anschluß 17 fließende Kraftstoffstrom eine Saugwirkung auf den Abführkanal 37 ausübt.

Zur Steuerung des Flüssigkeitsstromes durch das Saugrohr 36 ist diesem ein Magnetventil 48 vorgeschaltet, das im Bereich des Wasserspeicherraums 27 in den Boden 26 integriert ist. Zu diesem Zweck ist am Boden 26 durch eine zentral in den Wasserspeicherraum 27 ragende Ringwand 49 ein zylindrischer Raum ausgebildet, in welchem eine Spule 51 und ein Anker 52 des Magnetventils 48 angeordnet sind. Dieser zylindriche Raum im Boden 26 wird von einem Zwischenflansch 53 verschlossen, in dem zentrisch ein Ventilsitz 54 sowie eine zugeordnete Axialbohrung 55 angeordnet sind. Der Anker 52 bildet zugleich ein mit dem Ventilsitz 54 zusammenarbeitendes Schließglied, so daß das Magnetventil 48 die Verbindung zwischen der Axialbohrung 55 und Saugkanälen 56 steuern kann, die ebenfalls im Zwischenflansch 53 ausgeführt sind. Zur Ansteuerung des Magnetventils 48 dient ein am Boden 26 nach außen herausgeführter, elektrischer Steckanschluß 57.

Die Wirkungsweise des Kraftstoffilters 10 mit seiner Einrichtung zur Wasserentsorgung 15 wird wie folgt erläutert, wobei die grundsätzliche Funktion des Filters mit seiner automatischen Wasserabsaugung aus der eingangs genannten Druckschrift als an sich bekannt vorausgesetzt wird.

Im Kraftstoffilter 10 fließt der zu reinigende Kraftstoff vom Zulauf-Anschluß 16 auf die Schmutzseite 31, durchströmt axial den Wickeleinsatz 24 und gelangt gereinigt in den Wasserspeicherraum 27, von wo der Kraftstoff über die Nuten 43 im Dichtring 41 ungehindert in das Mittelrohr 28 einströmen kann. Von dort fließt der gereingte Kraftstoff über die Einlaßöffung 46 am Rohrstutzen 19 zum Ablauf-Anschluß 17. Im Bereich des Ringspaltes zwischen Rohrstutzen 19 und Saugrohr 36 wird die Geschwindigkeit des durchfließenden Volumenstroms erhöht, wodurch sich nach Art einer Venturidüse eine Saugwirkung auf den Abführkanal 37 ergibt. Bei nicht erregter Magnetspule 51 ist das Magnetventil 48 geschlossen, so daß über den Abführkanal 37 kein Wasser aus dem Wasserspeicherraum 27 abgesaugt werden kann. Wird das Magnetventil 48 über ein nicht näher gezeichnetes elektronisches Steuergerät drehzahlabhängig und/oder lastabhängig aktiviert, so wird der Eintritt in das Saugrohr 36 geöffnet und das im Wasserspeicherraum 27 abgeschiedene Wasser kann abgesaugt und in den Motor mit eingespritzt werden. Mit der Einrichtung 15 zur Wasserentsorgung kann somit in Systemen, bei denen der Kraftstoff durch eine Vorförderpumpe einen konstanten Durchfluß erzeugt, eine konstante Wasserabsaugung vermieden werden. Die Waserabsaugung wird vielmehr dann aktiviert, wenn die Drehzahl, die Belastung oder andere geeignete Parameter des Motors solche Werte aufweisen, daß der Rundlauf des Motors gewährleistet ist und der Motorbetrieb nicht gestört wird. Bei einem Kraftstoffilter 10 mit einem konstanten Kraftstoffdurchsatz, wie dies beispielsweise bei einem Common-rail-System der Fall ist, kann somit die Applikation der erforderlichen Absaugrate wesentlich einfacher vorgenommen werden.

Das Kraftstoffilter 10 mit seiner Einrichtung 15 zur Wasserentsorgung ist dabei in vorteilhafter Weise so ausgebildet, daß nach dem Abnehmen der Filterbox 13 vom Deckelteil 12 der Wickeleinsatz 24 leicht austauschbar ist. Beim Austausch des Wickeleinsatzes 24 gehen lediglich das billige Saugrohr 36 und der einfache Dichtring 41 verloren, während das Magnetventil 48 im becherförmigen Gehäuseteil 22 verbleibt. Das Einsetzen eines neuen Filterelements 23 in das Gehäuseteil 22 gestaltet sich relativ einfach, wobei der Dichtring 41 mit seiner unteren Stirnseite dichtend auf den Zwischenflansch 53 aufsitzt, so daß die Saugwirkung im Abfuhrkanal 37 während des Betriebs nicht verloren geht.

Selbstverständlich sind Änderungen an dem gezeigten Kraftstoffilter mit Einrichtung zur Wasserentsorgung möglich, ohne vom Gedanken der Erfindung abzuweichen. Die Einrichtung zur Wasserentsorgung mit im Gehäuse integriertem Magnetventil kann auch bei einem Kraftstoffilter angewandt werden, das anstelle eines axial durchströmten Wickeleinsatzes einen radial durchströmten Sterneinsatz aufweist. Obwohl die Anordnung des Magnetventils stromaufwärts vom Saugrohr vorteilhaft ist, kann es bei einer Sternfilterbauart besonders zweckmäßig sein, daß das Magnetventil an einer anderen Stelle in den das Wasser abführenden Abführkanal eingreift.

## Patentansprüche

1. Kraftstoffilter, insbesondere für Dieselkraftstoff, mit einem geschlossenen Gehäuse (11), das einen Zulauf-Anschluß (16) und einen Ablauf-Anschluß (17) aufweist und das einen Filtereinsatz (23) aufnimmt, welcher den Innenraum des Gehäuses (11) in zwei voneinander getrennte Kammern teilt, von denen die eine, auf der Schmutzseite (31) gelegene Kammer mit dem Zulauf-Anschluß (16) und die andere, auf der Reinseite (32) gelegene Kammer mit dem Ablauf-Anschluß (17) Verbindung haben und mit einer Einrichtung (15) zur Wasserentsorgung, bei der über ein Saugrohr (36) aus einem auf der Reinseite (32) gelegenen Wasserspeicherraum (27) Wasser zum Ablauf-Anschluß (17) abführbar ist, so daß es von dem abfließenden, gereingten Kraftstoffstrom fein vermengt mitgeführt wird, dadurch gekennzeichnet, daß der über das Saugrohr (36) abgeführte Flüssigkeitsstrom von einem Magnetventil (48) steuerbar ist und das Magnetventil (48) in das Gehäuse (11) integriert ist, wobei es dem Saugrohr (36) vorgeschaltet ist.

2. Kraftstoffilter nach Anspruch 1, dadurch gekennzeichnet, daß es ein axial durchströmtes Filterelement (23) aufweist, in dessen Mittelrohr (28) das Saugrohr (36) angeordnet ist und daß das Magnetventil (48) im Bereich des unterhalb des Filterelements (23) ausgebildeten Wasserspeicherraums (27) angeordnet ist.

3. Kraftstoffilter nach Anspruch 1 oder 2, dadurch gekennzeichnet, daß das Gehäuse (11) einen Deckelteil (12) und eine daran befestigte Filterbox (13) hat, wobei das Deckelteil (12) den Zulauf-Anschluß (16) für die zu filternde Flüssigkeit und den Ablauf-Anschluß (17) aufweist, welcher über einen Kanal (18) mit einem zentral am Deckelteil (12) angeordneten Rohrstutzen (19) Verbindung hat, der in einer Schmutz- (31) und Reinseite (32) voneinander trennenden Weise in die Filterbox (13) ragt, in der das axial durchströmte Filterelement (23) und der unterhalb letzterem angeordnete Wasserspeicherraum (27) angeordnet sind, der über das Mittelrohr (28) des Filterelements (23) mit dem Ablauf-Anschluß (17) Verbindung hat, und daß bei der Einrichtung (15) zur Wasserentsorgung die obere Öffnung (45) des Saugrohrs (36) der Einlaß-öffnung (46) des Rohrstutzens (19) so gegenüberliegt, daß durch den auf der Reinseite abfließenden Flüssigkeitsstrom eine durchflußabhängige Saugwirkung auf den Abführkanal (37) im Saugrohr (26) erreicht wird.

4. Kraftstoffilter nach Anspruch 3, dadurch gekennzeichnet, daß die Filterbox (13) lösbar am Deckelteil (12) befestigt ist und ein austauschbar angeordnetes Filterelement (23) aufnimmt, das in seinem Inneren das Saugrohr (36) mit dem Abführkanal (37) aufweist.

5. Kraftstoffilter nach Anspruch 3 oder 4, dadurch gekennzeichnet, daß das Saugrohr (36) als gerades Rohr ausgebildet ist, dessen Durchmesser wesentlich kleiner ist als der Durchmesser des Mittelrohrs (28) und daß es durch Halterungen (38) zentrisch im Mittelrohr (28) angeordnet ist, wobei seine axiale Länge gleich oder kleiner ist als diejenige des Mittelrohrs (28).

6. Kraftstoffilter nach einem der Ansprüche 1 bis 5, dadurch gekennzeichnet, daß das Magnetventil (48) am Boden (26) des Gehäuses (11) angeordnet ist und mit dem austauschbar im Gehäuse (11) angeordneten Filterelement (33) in lösbarer Wirkverbindung steht.

7. Kraftstoffilter nach Anspruch 6, dadurch gekennzeichnet, daß der Boden (26) der Filterbox (13) zur Aufnahme von Spule (51) und Anker (52) des Magnetventils (48) eine Ausnehmung aufweist, die durch einen Zwischenflansch (53) abgedeckt ist, in dem sich der Ventilsitz (54) mit einer davon ausgehenden Axialbohrung (55) und Saugkanäle (56) befinden, und der am Filterelement (23) dichtend anliegt.

8. Kraftstoffilter nach einem der Ansprüche 2 bis 7, dadurch gekennzeichnet, daß am unteren Ende des Mittelrohrs (28) ein elastischer Dichtring (41) eingesetzt ist, der das Saugrohr (36) an seinem unteren Ende (39) umgreift und stirnseitig am Magnetventil (48) anliegt, das im Abstand vom Saugrohr (36) endet und welcher Dichtring (41) den Abführkanal (37) im Saugrohr (36) mit der Axialbohrung (55) im Magnetventil (48) dicht verbindet.

9. Kraftstoffilter nach einem der Ansprüche 1 bis 8, dadurch gekennzeichnet, daß der elektrische Steckanschluß (57) des Magnetventils (48) am Boden (26) des Gehäuses (11) nach außen geführt ist.

## Claims

1. Fuel filter, in particular for diesel fuel, having a closed housing (11) which has an inlet connection (16) and an outlet connection (17) and which accommodates a filter insert (23) which divides the interior of the housing (11) into two chambers which are separated from each other and of which one chamber, which is situated on the dirty side (31), is connected to the inlet connection (16) and the other chamber, which is situated on the clean side (32), is connected to the outlet connection (17), and having a device (15) for water disposable in which water can be conducted away out of a water storage space (27), which is situated on the clean side (32), via a suction tube (36) to the outlet connection (17), with the result that it is carried along in a finely mixed manner by the cleaned fuel flow which is flowing off, characterized in that the liquid flow which is conducted away via the suction tube (36) can be controlled by a solenoid valve (48) and the solenoid valve (48) is integrated into the housing (11) where it is connected upstream of the suction tube (36).

2. Fuel filter according to Claim 1, characterized in that it has a filter element (23) through which flow passes axially and in the central tube (28) of which the suction tube (36) is arranged, and in that the solenoid valve (48) is arranged in the region of the water storage space (27) formed below the filter element (23).

3. Fuel filter according to Claim 1 or 2, characterized in that the housing (11) has a cover part (12) and a filter box (13) fastened thereon, the cover part (12) having the inlet connection (16) for the liquid to be filtered, and the outlet connection (17) which is connected, via a duct (18), to a connecting branch (19) which is arranged centrally on the cover part (12) and protrudes, in a manner which separates the dirty side (31) and clean side (32) from each other, into the filter box (13) in which are arranged the filter element (23), through which flow passes axially, and the water storage space (27) which is arranged below the latter and is connected, via the central tube (28) of the filter element (23), to the outlet connection (17), and in that in the device (15) for water disposal, the upper opening (45) of the suction tube (36) lies opposite the emission opening (46) of the connecting branch (19) in such a manner that by means of the liquid flow, which flows off on the clean side, a flow-dependent suction action on the outlet duct (37) in the suction tube (36) is achieved.

4. Fuel filter according to Claim 3, characterized in that the filter box (13) is fastened releasably on the cover part (12) and accommodates a filter element (23) which is arranged replaceably and in its interior has the suction tube (36) with the outlet duct (37).

5. Fuel filter according to Claim 3 or 4, characterized in that the suction tube (36) is designed as a straight tube whose diameter is substantially smaller than the diameter of the central tube (28), and in that it is arranged centrally in the central tube (28) by means of supports (38), its axial length being the same as, or smaller than that of the central tube (28).

6. Fuel filter according to one of Claims 1 to 5, characterized in that the solenoid valve (48) is arranged on the bottom (26) of the housing (11) and is in releasably operative connection to the filter element (33) arranged replaceably in the housing (11).

7. Fuel filter according to Claim 6, characterized in that the bottom (26) of the filter box (13) has a recess for accommodating the coil (51) and armature (52) of the solenoid valve (48) and is covered by an intermediate flange (53) in which the valve seat (54) having an axial bore (55) emerging therefrom, and suction ducts (56) are situated, and which bears in a sealing manner against the filter element (23).

8. Fuel filter according to one of Claims 2 to 7, characterized in that at the lower end of the central tube (28) there is inserted an elastic sealing ring (41) which engages around the lower end (39) of the suction tube (36) and bears on its end face against the solenoid valve (48) which ends at a distance from the suction tube (36), and which sealing ring (41) connects the outlet duct (37) in the suction tube (36) to the axial bore (55) in the solenoid valve (48) in a sealing manner.

9. Fuel filter according to one of Claims 1 to 8, characterized in that the electrical plug-in connection (57) of the solenoid valve (48) at the bottom (26) of the housing (11) is directed outwards.

## Revendications

1. Filtre pour carburant, en particulier pour carburant pour moteurs Diesel, avec un boîtier fermé (11) qui présente un raccord d'entrée (16) et un raccord de sortie (17) et qui reçoit une cartouche de filtre (23), qui partage l'intérieur du boîtier (11) en deux chambres séparées l'une de l'autre, dont l'une est en liaison sur la chambre mise du côté sale (31) avec le raccord d'entrée (16) et l'autre, sur la chambre mise du côté propre (32), avec le raccord de sortie (17) et avec un système (15) servant à éliminer l'eau, dans lequel on peut évacuer l'eau par l'intermédiaire d'un tuyau d'aspiration (36) à partir d'une chambre d'accumulation de l'eau (27), mise sur le côté propre (32), vers le raccord de sortie (17), de telle sorte que l'eau est entraînée en même temps de façon finement mélangée par le courant de carburant purifié, en écoulement,
caractérisé en ce que
• l'écoulement du liquide évacué par le tuyau d'aspiration (36) peut être commandé par une électrovanne (48) et
• l'électrovanne (48) est intégrée dans le boîtier (11), en étant montée en amont du tuyau d'aspiration (36).

2. Filtre pour carburant selon la revendication 1,
caractérisé en ce que
• le filtre présente un élément de filtre (23) parcouru axialement, dans le tube médian (28)duquel est disposé le tuyau d'aspiration (36), et
• l'électrovanne (48) est disposée dans la zone de la chambre d'accumulation de l'eau (27) qui est constituée en dessous de l'élément de filtre (23)

3. Filtre de carburant selon la revendication 1 ou 2,
caractérisé en ce que
• le boîtier (11) a une partie (12) formant couvercle et une boîte de filtre (13) fixée dessus, la partie (12), formant couvercle, présentant le raccord d'arrivée (16) pour le liquide à filtrer et le raccord de sortie (17) qui est en liaison par un canal (18) avec un ajutage tubulaire (19) disposé de façon centrale sur la partie (12) formant couvercle, ajutage tubulaire (19) qui pénètre dans la boîte de filtre (13) d'une manière qui sépare l'un de l'autre le côté sale (31) et le côté propre (32), boîte de filtre (13) dans laquelle sont disposés l'élément de filtre (23) parcouru axialement et la chambre d'accumulation de l'eau (27) disposée en dessous de ce dernier, chambre d'accumulation de l'eau qui est en liaison avec le raccord de sortie (17) par l'intermédiaire du tube central (28) de l'élément de filtre (23) et
• dans le cas du système (15) servant à éliminer l'eau l'ouverture supérieure (45) du tuyau d'aspiration (36) se trouve en regard de l'ouverture d'entrée (46) de l'ajutage tubulaire (19) de telle sorte que l'on obtient un effet d'aspiration en fonction de l'écoulement, du fait du flux de liquide qui s'écoule sur le côté propre, sur le canal d'évacuation (37) dans le tuyau d'aspiration (26).

4. Filtre de carburant selon la revendication 3,
caractérisé en ce que
la boîte de filtre (13) est fixée de façon amovible sur la partie (12), formant couvercle, et reçoit un élément de filtre (23) disposé de manière interchangeable qui présente en son intérieur le tuyau d'aspiration (36) avec le canal d'évacuation (37).

5. Filtre de carburant selon la revendication 3 ou 4,
caractérisé en ce que
• le tuyau d'aspiration (36) est constitué sous la forme d'un tuyau droit, dont le diamètre est sensiblement plus petit que le diamètre du tube central (28) et
• il est disposé au moyen de supports (38) au centre dans le tuyau central (28), sa longueur axiale étant égale ou inférieure à celle du tube central (28).

6. Filtre de carburant selon l'une des revendications 1 à 5,
caractérisé en ce que
l'électrovanne (48) est disposée sur le fond (26) du boîtier (11) et est en liaison opérationnelle amovible avec l'élément de filtre (33) disposé de façon interchangeable dans le boîtier (11).

7. Filtre de carburant selon la revendication 6,
caractérisé en ce que
le fond (26) de la boîte du filtre (13) présente pour recevoir la bobine (51) et l'induit (52) de l'électrovanne (48) un évidement qui est recouvert par une bride intermédiaire (53), dans laquelle se trouvent le siège de la vanne (54) avec un alésage axial (55) partant de là et des canaux d'aspiration (56) et qui repose de façon étanche sur l'élément de filtre (23).

8. Filtre de carburant selon l'une des revendications 2 à 7,
caractérisé en ce que
sur l'extrémité inférieure du tube central (28) est inséré une bague d'étanchéité élastique (41) qui entoure le tuyau d'aspiration (36) à son extrémité inférieure (39) et repose du côté frontal sur l'électrovanne (48), qui se termine à une certaine distance du tuyau d'aspiration (36), la bague d'étanchéité (41) reliant le canal d'évacuation (37) dans le tuyau d'aspiration (36) à l'alésage axial (55) dans l'électrovanne (48) de façon étanche

9. Filtre de carburant selon l'une des revendications 1 à 8,
caractérisé en ce que
le raccord électrique de connexion (57) de l'électrovanne (48) passe vers l'extérieur sur le fond (26) du boîtier (11).
